(19) Europäisches Patentamt
European Patent Office
Office européen des brevets

(11) Veröffentlichungsnummer: **0 550 851 A1**

(12) **EUROPÄISCHE PATENTANMELDUNG**

(21) Anmeldenummer: **92121288.2**

(22) Anmeldetag: **15.12.92**

(51) Int. Cl.$^{5}$: **B32B 27/08**, B32B 27/30, B65D 65/40

(30) Priorität: **21.12.91 DE 4142692**

(43) Veröffentlichungstag der Anmeldung: **14.07.93 Patentblatt 93/28**

(84) Benannte Vertragsstaaten: **AT BE CH DE DK ES FR GB IT LI NL SE**

(71) Anmelder: **RÖHM GMBH**
**Kirschenallee**
**W-6100 Darmstadt(DE)**

(72) Erfinder: **Siol, Werner, Dr.**
**Goerdelerweg 17**
**W-6100 Darmstadt-Eberstadt(DE)**
Erfinder: **Terbrack, Ulrich**
**Berliner Strasse 3**
**W-6107 Reinheim 2(DE)**

(54) **Heisssiegelbare Kunststoff-Folien I.**

(57) Die Erfindung betrifft heißsiegelfähige Kunststoff-Folien mit wenigstens zweiphasigem Aufbau im Dickenbereich bis 400 µm, die zum dichtenden Verschließen von Kunststoff-Behältern geeignet sind, dadurch gekennzeichnet, daß die Kunststoff-Folien KF aufgebaut sind aus

a) einem hochmolekularen oder vernetzten Polymeren P mit einem Molekulargewicht Mw größer 50 000 und einer Glastemperatur Tg kleiner 10 Grad C und damit zu wenigstens 2 Gew.-% kovalent verbunden.

b) einem auf Polystyrol haftenden Copolymeren CP mit einer Glastemperatur Tg oberhalb 20 Grad C aufgebaut aus

α) 20 - 80 Gew.-% mindestens eines Monomeren der Formel I

$$CH_2 = \underset{\substack{|\\ CH_3}}{C} - \overset{\substack{O\\ \|}}{C} - OR_1 \qquad (I)$$

worin $R_1$ für Methyl- oder Ethyl (vorzugsweise Methyl) steht

β) 80 - 20 Gew.-% mindestens eines Monomeren der Formel II

$$CH_2 = \underset{\substack{|\\ CH_3}}{C} - \overset{\substack{O\\ \|}}{C} - OR_1 \qquad (I)$$

worin $R_2$ für einen Alkylrest mit 4 bis 18, vorzugsweise 4 bis 12 Kohlenstoffatomen oder einem von Cyclopentyl oder Cyclohexyl verschiedenen Cycloalkylrest steht, und

γ) 0 - 10, vorzugsweise 0 - 5 Gew.-% eines mit den Monomeren I und II copolymerisierbaren von diesen verschiedenen Monomeren, das nicht Cyclohexylmethacrylat darstellt.

EP 0 550 851 A1

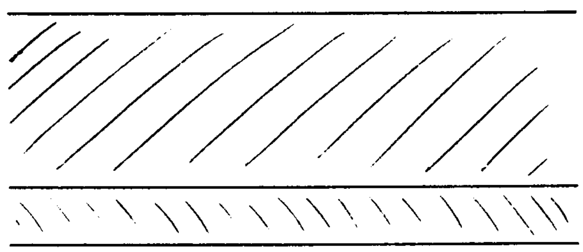

T: schlagzähe Trägerschicht

S: leicht fließende Siegelschicht

Abb. 1: Aufbau einer zweischichtigen heißsiegelbaren Kunststoff-Folie KF

Gebiet der Erfindung

Die Erfindung betrifft heißsiegelbare Kunststoff-Folien mit wenigstens zweiphasigem Aufbau im Dickenbereich bis 400 µm, die besonders zum dichtenden Verschließen von Kunststoff-Behältern beispielsweise aus Polystyrol geeignet sind. Die Kunststoff-Folien eignen sich insbesondere zum Versiegeln von Behältern zum Aufbewahren von Lebensmitteln wie beispielsweise Joghurt-Bechern.

Stand der Technik

An die Stelle von Gefäßen und Behältern aus Holz oder aus anorganischen Werkstoffen wie Metall, Glas, Keramik sind in der Gegenwart vielfach Kunststoffprodukte getreten. Besonders hoch sind die Anforderungen in jedem Falle, wenn die Gefäße bzw. Behälter zur Aufnahme bzw. Konservierung von Lebensmitteln dienen.
Ein maßgeblicher Gesichtspunkt der Lebensmittelkonservierung, sei es durch Dehydratisierung, Gefrieren oder Sterilisieren, ist die vollständige Verhinderung mikrobiellen Wachstums. Daraus ergibt sich vielfach der Zwang, die Behälter gasdicht zu verschließen. Darüber hinaus sind bei Kunststoffbehältern die mechanische Stabilität, Kontrolle des Wassergehalts, sowie die Einwirkung der Atmosphäre und des Lichts zu berücksichtigen. (Vgl. Ullmann's Encyclopedia of Industrial Chemistry 25th Ed. Vol. A11, 523 - 560; 583 - 618 VCH 1988; Dort wurden auch die geltenden Normen abgehandelt).

Zum Verschließen von Kunststoffgefäßen werden in der Lebensmitteltechnologie insbesondere bei Molkereiprodukten wie Joghurtbechern weithin mit einem Siegellack beschichtete Aluminiumdeckel verwendet.

Vielfach stellen derartige Aluminiumdeckel ein dreischichtiges Laminat dar, dessen äußere Schicht häufig aus (biaxial orientiertem) Polyethylenterephthalat (O-PET), biaxial orientiertem Polypropylen (OPP) oder Polyamid (O-PA) oder aus Cellulose besteht. Die heißsiegelbare, innere Schicht besteht dagegen gewöhnlich aus Polyethylen, Ethylen-Copolymerisaten oder Polypropylen (US-A 4 753 708;; G. Stehle, Neue Verpackung 9/91, S. 94 - 101). Gegen die Verwendung von Aluminium z.B. zur Verpackung von Lebensmitteln werden aber mehr und mehr oekonomische und oekologische Gründe in die Diskussion gebracht, insbesondere der hohe Energieaufwand bei der Herstellung des Aluminiums.
Es kommen daher auch Kunststoff-Folien anstelle von Aluminium zur Anwendung, die mit einem siegelfähigen Lack versehen sind. Der Siegellack wird dabei dem verwendeten Kunststoff angepaßt. Als relativ preisgünstiges Material für siegelfähige Folien mit guter mechanischer Festigkeit und guten Barriereeigenschaften spielt Hart-PVC eine ganz erhebliche Rolle, wobei als Siegellackschicht gewöhnlich ein Acrylharz dient, dessen Haftfestigkeit und Aufschmelzpunkt durch Zusätze zweckmäßig modifiziert werden kann.

Der Verwendung von Polyvinylchlorid (PVC) stehen gewisse Bedenken gegenüber (vgl. Ullmann's Encyclopedia loc.cit. pg. 593). Es herrscht daher die Tendenz, PVC für Wegwerfpackungen durch andere thermoplastische Materialien zu ersetzen.

In der DE-A 35 31 036 werden durch Koextrusion herstellbare Kunststoff-Folien beschrieben, die aus einer siegelfähigen Schicht aus schlagzähem Polystyrol, einem Block-Copolymerisat und einem Gleitmittel bestehen.

In der EP-A 0 406 681 wird aber zu recht auf die Problematik bei Verwendung von heißsiegelfähigen Kunststoff-Folien anstelle von Aluminiumfolie hingewiesen. Einschränkend bemerkbar macht sich im Regelfall die wesentlich engere Verarbeitungsbreite. Überwiegend ergibt sich ein sehr enger Verarbeitungsbereich von 10 - 20 Grad C, der ziemlich konstant eingehalten werden muß, um eine störungsfreie Produktion und einen einwandfreien Gebrauch der versiegelten Packung zu garantieren. Bei Abfüllanalgen mit mehreren Kavitäten zum gleichzeitigen Abfüllen von Bechern ist diese Voraussetzung nicht immer erfüllt.
Die EP-A 0 406 681 hatte sich zur Aufgabe gesetzt, die nach dem Koextrusionsverfahren gemäß DE-A 35 31 036 herstellbaren Folien auf Polystyrolbasis u.a. so zu verbessern, daß die Verarbeitungsbreite und die Verarbeitungssicherheit vergrößert werden.
Ferner sollte eine einwandfreie Produktion auch auf Abfüllanlagen mit mehreren Abfüllkavitäten sichergestellt werden. In der Praxis läuft dies auf die Anwendung höherer Siegeltemperaturen mit entsprechenden Anforderungen an die Qualität der Kunststoff-Folien hinaus.

Nach der EP-A 0 406 681 wurden diese Anforderungen erfüllt durch eine nach dem Koextrusionsverfahren oder durch Kaschieren hergestellte siegelfähige Kunststoff-Folie aus zwei Schichten A und C und gegebenenfalls einer Schicht B sowie gegebenenfalls je einer Schicht eines Haftvermittlers D zur Verbindung von jeweils zweien der Schichten A, gegebenenfalls B und c, bestehend aus 1 bis 50 % einer Schicht aus einem heißsiegelfähigen, schlagzähen Polystyrol A, bis zu 95 % einer Trägerschicht B und 1 bis 99 % einer hochschmelzenden Kunststoffschicht C, wobei die Summe der Stärken oder des Gewichts von A und

gegebenenfalls B und C jeweils 100 ist.

Aufgabe und Lösung

Während Polystyrol als Verpackungsmaterial von den Herstellungskosten und den Umformungsbedingungen (110 - 160 Grad C) her günstig zu beurteilen ist, kann die relativ hohe Permeabilität für Gase und Dämpfe zu Problemen führen. Zwar kann durch den Schichtenaufbau der auf schlagzähem Polystyrol basierenden Siegelfolie den Schwierigkeiten begegnet werden, die aus dem Anhaften am Siegelbacken entstanden waren aber dies wird mit einem erhöhten Aufwand bei der Herstellung und gegebenenfalls mit Entsorgungsproblemen erkauft.

Es bestand daher nach wie vor Bedarf an einem heißsiegelfähigen Folienmaterial. Insbesondere sollte die Folie möglichst in homogener Schicht und ohne zusätzliche Oberflächenbehandlung zum gasdichten Verschließen von Gefäßen auf Polystyrolbasis geeignet sein.

Vor allem aber sollte das Folienmaterial umweltgerecht sein, d.h. auch bei einem Aufbau aus mehreren Schichten sollte das Folienmaterial recyclierbar sein.

Es wurde nun gefunden, daß die erfindungsgemäßen, heißsiegelbaren Kunststoffolien KF - obwohl einer anderen Polymerklasse angehörend - die Anforderungen der Technik im Hinblick auf die mechanische Stabilität, chemisches Verhalten, Absperrverhalten, thermisches Verhalten, Verarbeitbarkeit (s. Ullmann's Encyclopedia Vol., A11, loc.cit.) und Recyclierbarkeit sehr weitgehend erfüllen.

Die Erfindung betrifft somit heißsiegelbare Kunststoff-Folien KF mit wenigstens zweiphasigem Aufbau im Dickenbereich bis 400 µm, die zum dichtenden Verschließen von Kunststoff-Behältern, insbesondere solchen aus Polystyrol geeignet sind,

wobei die Kunststoff-Folie KF aufgebaut ist aus

a) aus einem hochmolekularen oder vernetzten Polymeren P mit einem Molekulargewicht Mw größer 50 000, bevorzugt größer 100 000 und einer Glastemperatur Tg kleiner 10 Grad C, vorzugsweise kleiner 0 Grad C und damit zu wenigstens 2 Gew.-%, vorzugsweise kovalent verbunden

b) einem auf Polystyrol haftenden Copolymeren CP mit einer Glastemperatur Tg oberhalb 20 Grad C aufgebaut aus

α) 20 - 80 Gew.-% mindestens eines Monomeren der Formel I

$$CH = \underset{\displaystyle CH_3}{C} - \overset{\displaystyle O}{\overset{\|}{C}} - OR1 \qquad (I)$$

worin $R_1$ für Methyl- oder Ethyl (vorzugsweise Methyl) steht

β) 80 - 20 Gew.-% mindestens eines Monomeren der Formel II

$$CH_2 = \underset{\displaystyle CH_3}{C} - \overset{\displaystyle O}{\overset{\|}{C}} - OR_2 \qquad (II)$$

worin $R_2$ für einen Alkylrest mit 4 bis 18, vorzugsweise 4 bis 12 Kohlenstoffatomen oder einen von Cyclopentyl oder Cyclohexyl verschiedenen Cycloalkylrest, vorzugsweise mit 4 bis 12 Kohlenstoffatomen steht, und

γ) 0 - 10, vorzugsweise 0,5 - 5 Gew.-% eines mit den Monomeren I und II copolymerisierbaren von diesen verschiedenen Monomeren, das in der Regel nicht Cyclohexyl(meth)acrylat ist.

Unter die angegebene Definition der Polymeren P fallen an sich bekannte Elastomere (vgl. Römpp Chemie Lexikon, 9. Auflage, Bd. 2, S. 1105 - 1107, Georg-Thieme-Verlag.

Vorzugsweise sind die Polymerisate P ausgewählt aus der Gruppe bestehend aus Polyolefinen, Polydienen, Polyacrylaten, Ethyl-Vinylacetat-Copolymeren, Polyvinylestern, Polysiloxanen (vgl. US-A 4 906 699; Ullmanns Enzyklopädie der Techn. Chemie, 4. Auflage, Bd. 13, 595 - 635, Verlag Chemie 1977).

Von besonderem Interesse ist die Ausführungsform der heißsiegelbaren Kunststoff-Folien KF, bei der die Polymerisate mittels Pfropfpolymerisation gewonnen werden. Insbesondere ist zu erwähnen die Ausführung in Form eines Kern-Schale-Polymerisats wobei die Polymeren P dem Kernmaterial zuzurechnen sind.

Die Polymeren P

Die hochmolekularen oder vernetzten Polymeren P besitzen definitionsgemäß ein Molekulargewicht Mw größer 50 000 bevorzugt größer 100 000, insbesondere ein solches im Bereich größer 200 000 und - soweit nicht vernetzt - bis ca. 5 Millionen und eine Glastemperatur Tg kleiner 0 Grad C. Die Bestimmung des Molekulargewichts geschieht soweit sinnvoll mittels Gelpermeationschromatographie. (Vgl. H.F. Mark et al. Encyclopedia of Polymer Science & Engineering 2nd Ed. Vol 10, pg. 1 - 19, J. Wiley 1987; Ullmanns Encyclopadie der Techn. Chemie, 4. Auflage, Bd. 15, 207 - 209, Verlag Chemie 1978). Die Werte der Glastemperaturen bzw. die Bestimmung derselben kann dem Polymer Handbook, Ed. J. Brandrup, E.H. Immergut, 3rd. Ed. VI, 209 John Wiley 1989 bzw. H.f. Mark et al. Encyclopedia of Polymer Science & Engineering 2nd. Ed. Vol. 7, pg. 531 - 43, J. Wiley 1989; entnommen werden.

Definitionsgemäß handelt es sich um Polymere P mit einer Glastemperatur Tg < 10 Grad C, vorzugsweise < 0 Grad C, insbesondere < -10 Grad C, worunter Polymerisate fallen, die gewöhnlich unter der Bezeichnung "Elastomere" bzw. "Kautschuk" zusammengefaßt werden. Gegebenenfalls sind die Polymeren vernetzt. Vorzugsweise sind die Polymeren P ausgewählt aus der Gruppe, bestehend aus Polyolefinen, Polydienen, Polyacrylaten, Ethylenvinylacetatcopolymeren, Polysiloxanen.

Bei den Polyolefinen handelt es sich vorzugsweise um Homo- bzw. Copolymeren des Ethylens, Propylens, Isobutylens (vgl. Ullmann's Encyclopädie der Techn. Chemie, 4. Auflage Bd. 19, S. 167 - 226, Verlag Chemie 1980). Im allgemeinen liegt das Molekulargewicht Mw der Polyolefine im Bereich 50 000 bis 1 000 000 (Bestimmung mit Gel-Permeationschromatographie).

Bei den Polydienen handelt es sich insbesondere um die einschlägig bekannten Kautschuk-Typen wie Polybutadien, Poly-2-chlorbutadien, Polyisopren (vgl. Ullmann loc.cit., 4. Auflage Bd. 13, S. 595 - 635). Das Molekulargewicht liegt in der Regel im Bereich 50 000 bis 1 000 000. Ethylen-Vinylacetat-Copolymere lassen sich hinsichtlich ihrer Zusammensetzung in gewissen Grenzen variieren. In der Regel liegt der Vinylacetat-Gehalt im Bereich 40 - 75 %, vorzugsweise 40 - 50 %. Im allgemeinen liegen die Molekularmassen im Bereich 100 000 bis 400 000. Ihre Herstellung erfolgt vorteilhaft durch Lösungspolymerisation bei mittlerem Ethylendruck von 200 - 400 bar, insbesondere in tert.-Butanol als Lösungsmittel. In der Regel beziehen sich diese Molekularmassenangaben der Kautschuktypen auf das Molekulargewicht der Polymeren, wie sie bei der Pfropfung nach b) (also vor der Pfropfung) eingesetzt werden. In einer bevorzugten Ausführungsform sind diese Elastomeren jedoch nach Pfropfung mit b) vernetzt. Dabei ist bevorzugt, daß die Elastomeren in Partikelform vorliegen, wobei der Durchmesser dieser Gummiteilchen im allgemeinen im Bereich 0,05 - 10 µm liegt, insbesondere sind Teilchen im Bereich von 0,2 - 5 µm bevorzugt. Besonders vorteilhaft sind solche Gummiteilchen, die Hartphaseneinschlüsse aufweisen (vgl. Ullmann loc.cit. Bd. 13, S. 623).

Weiter sind als Polymere P von besonderem Interesse Ethylen-Propylen-Dien-Polymere (EPDM, vgl. Ullmann loc.cit., Bd. 13, S. 619 - 621; Kirk-Othmer, Encyclopedia of Industrial Chemistry 3rd. Ed. Vol. 8, pg. 492 - 500, Vol. 7, pg. 687, 693, J. Wiley; Zur Herstellung vgl. S.Cesca J. Polym. Sci, Macromol, Rev. 10, 1 (1975)). Als Dien-Komponente empfiehlt sich dabei insbesondere das Dicyclopentadien, das Ethylidennorbornen und das trans-Hexadien-1,4.

Die Molekularmassen Mw der (großtechnisch erzeugten) EPDM-Polymerisate liegen im allgemeinen im Bereich 200 000 bis 500 000. Die dynamischen Einfriertemperaturen werden mit -45 Grad C bis -30 Grad C (Sequenztypen) angegeben. Bei Enthylengehalten von 45 - 60 Gew.-% sind die Terpolymeren völlig amorph. Bei Produkten mit Ethylengehalten von 70 - 80 % rechnet man mit teilkristallinen Ethylen-Sequenzen mit durchschnittlich 5 - 10 aufeinanderfolgenden Ethyleneinheiten (= sogenannte Sequenztypen).

Neben EPDM-Polymeren können auch EPTM-Polymere (Ethylenpropylen-Trien) eingesetzt werden. Weiter seien als Polymere P Polysiloxane (MQ, MPQ, MPVQ, nach ISO 1629, 1. Ausgabe 1976) genannt. Üblicherweise besitzen die gebräuchlichen Silikonkautschuke eine, durch spezielle Substituenten modifizierte Polydimethylsiloxan-Kette (vgl. Ullmann loc.cit. Bd. 13, 628 - 663).

Die bei Raumtemperatur vernetzenden Typen sind endständig mit funktionellen Gruppen versehene Polysiloxane mit Molmassen von $10^4$ - $10^5$. Die heißvulkanisierenden Typen meist auf Basis von Polydimethylsiloxan (MQ) lassen sich mit schnell zerfallenden Diarylperoxiden bei erhöhter Temperatur, beispielsweise bei 150 Grad C vernetzen. Als ein Vorteil des erfindungsgemäßen Kunststoffmaterials KM kann u.a. gelten, daß in der Komponente B) jeweils an sich bekannte, insbesondere handelsübliche Polymere P eingesetzt werden können.

Unter den erfindungsgemäß zu verwendenden Polyacrylaten seien insbesondere solche verstanden, deren Monomerbausteine eine Glastemperatur Tg des resultierenden Homo- bzw. Copolymeren von < 10 Grad C, vorzugsweise < -10 Grad C besonders bevorzugt -30 Grad C gewährleisten. Die Glastemperatur Tg der

Homo- bzw. Mischpolymerisate ist bekannt bzw. läßt sich in bekannter Weise vorherbestimmen (vgl. R. Vieweg, F. Esser Kunststoff-Handbuch Bd. IX, S. 333 - 339, Carl Hanser Verlag 1975; J. Brandrup, E.H. Immergut, Polymer Handbook, III-144 bis III-148, John Wiley 1975, Kirk-Othmer, Encyclopedia of Chemical Technology 3rd. Ed. Vol. 1, 388 J. Wiley 1978).
Vorzugsweise werden die Polyacrylate durch Polymerisation in wäßriger Emulsion, teilweise auch in Suspension hergestellt. Besonders bei Polyacrylaten als Polymer P ist eine Herstellung des Polymermaterials für die Kunststoff-Folie KF durch Emulsionspolymerisation bevorzugt (vgl. H. Rauch-Puntigam, Th. Völker, Acryl- und Methacrylverbindungen loc.cit. S. 217 - 230), da auf diesem Wege besonders einfach Kunststoffmaterialien mit einem definierten Teilchenaufbau erzeugt werden können. So ist es insbesondere bevorzugt, Latex-Teilchen mit einer äußeren Hülle aus dem Polymeren CP aufzubauen, die im Inneren einen Gummi aus vernetztem Polyacrylat P enthalten. Besonders bevorzugt sind dabei Latex-Teilchen mit einem wenigstens dreistufigen Aufbau, also solche Teilchen, die in dem Polyacrylat P noch einen harten Polymerkern aufweisen. Insgesamt sollen diese Polyacrylatteilchen P (mit eingelagertem harten Kern) einen Durchmesser von 0,1 - 3 (bevorzugt 0,2 - 1) um aufweisen. Prinzipiell ist der Aufbau solcher Latexteilchen und die Isolierung des Polymerisatfeststoffes in der deutschen Patentanmeldung P 33 00 256 bzw. der US-A 4 513 118 und der US-A 4 997 883 beschrieben.
Zweckmäßig arbeitet man bei der Emulsionspolymerisation im neutralen bzw. leicht sauren pH-Bereich, wobei die Verwendung langkettiger Alkylsulfate bzw. Alkylsulfonate als Emulgatoren günstig ist.
Als Initiatoren dienen zweckmäßig die einschlägig bekannten Azoverbindungen und organische oder anorganische Peroxide wie Kaliumpersulfat oder auch Redox-Systeme wie z.B. Persulfat/Bisulfit. Im allgemeinen liegt der Gehalt an Initiator im Bereich 0,001 bis 1 Gew.-% bezogen auf die Monomeren. Zum Zweck der Suspensionspolymerisation werden vorwiegend nichtionogene, wasserlösliche Dispersionsstabilisatoren, sowie als Initiatoren organische Peroxide bzw. Azoverbindungen verwendet, die in den Monomeren löslich sind. (Vgl. H.Rauch-Puntigam, Th. Völker, Acryl- und Methacrylverbindungen, Springer-Verlag, Heidelberg 1967). In der Regel enthalten diese Acrylatelastomeren noch vernetzende Monomeren (z.B. Allylmethacrylat) in Anteilen von 0,1 bis 5 Gew.-%.

Kern-Schale-Polymerisate lassen sich nach dem oben beschriebenen zweistufigen Emulsionspolymerisations-Verfahren außer mit Polyacrylaten als Kernmaterial beispielsweise auch mit (vernetztem) Polybutadien oder (vernetzten) Polyvinylestern gewinnen. Der oben beschriebene dreistufige Aufbau mit einem "harten" Kern kann mittels Emulsionspolymerisation auch ausgehend von PMMA oder Polystyrol durchgeführt werden, wobei die Zwischenzone vorzugsweise aus einem Elastomeren wie Polyacrylat (vernetzt), Polyvinylester (vernetzt), Polybutadien und die Schale aus dem Polymermaterial CP aufgebaut ist.

Die Copolymeren CP

Die Anteile der Monomeren $\alpha$), $\beta$) und $\gamma$) am Copolymeren CP ergänzen sich jeweils zu 100 Gew.-%. Definitionsgemäß steht $R_2$ für einen gegebenenfalls verzweigten, vorzugsweise aber linearen (unverzweigten) Alkylrest mit mindestens 4 und bis zu 12 Kohlenstoffatomen.
Darüberhinaus ist die Befolgung der Regel nützlich, daß mit steigender C-Zahl des Restes $R_2$ der relative Anteil der Monomeren (II) am Copolymeren CP abnehmen soll, d.h. der relative Anteil dieser Monomeren soll sich gegenläufig zur Zahl der C-Atome im Rest $R_2$ verhalten. Quantitativ kann die Regel für den Anteil der Monomeren der Formel II am Copolymerisat CP wie folgt gefaßt werden (siehe auch DE-OS 37 30 025):

$$\text{Gew.-\% Monomer gemäß Formel II} = \frac{\text{Molekulargewicht des Monomeren der Formel I}}{\text{Molgew. des Monomeren der Formel I + Molgew. des Monomeren der Formel II}} \times 100$$

Genannt seien insbesondere CP, die zu 20 - 80 Gew.-% aus Monomeren der Formel II aufgebaut sind, worin $R_2$ für einen linearen Alkylrest wie n-Butyl-, n-Hexyl-, n-Decyl-sowie die Alkylrest der Talgfettalkohole steht, daneben solche, in denen $R_2$ für einen n-Pentyl-, n-Hexyl, n-Octyl-, Ethylhexyl-, n-Dodecyl-, n-Hexadecyl-, Stearyl-Rest steht. Ebenso kann $R_2$ für einen gegebenenfalls substituierten Cycloalkylrest mit Ausnahme der definitionsgemäß ausgeschlossenen $C_5$-$C_6$-Cycloalkylreste stehen.

Erfindungsgemäß gut brauchbare Copolymere CP können zum Beispiel die Zusammensetzung 50 Gew.-% MMA/50 Gew.-% Butylmethacrylat besitzen. Ebenso sind z.B. Copolymere aus 70 Gew.-% Methylmethacrylat und 30 Gew.-% n-Decylmethacrylat brauchbar. Vorliegende Beobachtungen scheinen darauf hinzudeuten, daß zwischen $R_1$ und $R_2$ ein Unterschied von $\geqq$ 2 C-Atomen, vorzugsweise $\geqq$ 3 C-

Atomen besteht.

Die Copolymerisation der Monomeren I und II kann wie vorstehend beschrieben durchgeführt werden.

Sofern die Polymeren P mit niedriger Glastemperatur nicht in Form eines Blockcopolymeren mit den Copolymeren CP verknüpft sind, etwa in Form eines 3-Blockcopolymeren CP-P-CP werden in der Regel nicht 100 % des Copolymeren CP an das Polymere P kovalent gebunden sein. Im allgemeinen beträgt der Gewichtsanteil der Copolymeren CP, der an das Polymere P kovalent gebunden ist, wenigstens 2 %, bevorzugt wenigstens 5 Gew.-% und ganz besonders bevorzugt wenigstens 10 Gew.-% (jeweils bezogen auf das Copolymere CP). Diese wenigstens teilweise Anbindung des Polymeren CP an das Polymere P ist für eine gute Verteilung des Polymeren P in CP wichtig, vor allem aber wird durch diese gute Anbindung die erforderliche Zähigkeit des Gesamtsystems erreicht.

Im allgemeinen ist das Molekulargewicht des nicht an das Polymere P gebundenen Copolymeren CP begrenzt. So wird das Molekulargewicht des Coplymeren CP in aller Regel im Bereich 2 000 - 500 000 (Mw) liegen, bevorzugt im Bereich 5 000 - 200 000, besonders bevorzugt im Bereich 10 000 - 200 000 Dalton.

Die Verarbeitbarkeit, Zähigkeit, siegelbarkeit, Thermoformbarkeit und Blockfestigkeit der Gesamtsysteme läßt sich nahezu beliebig einstellen durch folgende Parameter:

- Gewichtsverhältnis P zu CP (in der Regel enthalten die Kunststoff-Folien 5 - 95, bevorzugt 10 - 90, ganz besonders bevorzugt 20 - 60 Gew.-% P und 95 - 5, bevorzugt 90 - 10, ganz besonders bevorzugt 80 - 40 Gew.-% CP)
- Verknüpfung von P mit CP
- Die Teilchengröße der in der Regel vernetzten Polymeren P
- Das Molekulargewicht des Copolymeren CP
- Die Glastemperatur des Copolymeren CP

So kann ein besonders leicht fließendes Material durch Regeln der Molekulargewichte der Copolymeren CP mit 0,1 - 2 Gew.-% Mercaptanen als Polymerisationsregler erreicht werden.

Ein derartig geregeltes Material fließt nicht nur sehr leicht, es läßt sich auch bei relativ niedriger Temperatur (150 - 200 Grad C) auf den entsprechenden Untergrund (in der Regel schlagzähges Polystyrol) siegeln.

Ein besonders elegantes Verfahren zur Herstellung der CP-P-Pfropfpolymeren ist (wie oben ausgeführt) eine mehrstufige Emulsionspolymerisation, wobei in einer ersten Stufe ein harter Kern, z.B. vernetztes PMMA oder Polystyrol, in einer 2. Stufe ein Butadien oder ein Acrylsäureester z.B. Butylacrylat als solches oder unter Zusatz eines Vernetzers polymerisiert wird und schließlich eine äußere Schale aus dem Polymeren CP, wobei - wie ausgeführt - ein Teil des Polymeren CP auf das Polymere P gepfropft ist und ein Teil der Polymeren CP durch Zusatz von 0,1 - 2 Gew.-% Mercaptan, z.B. Dodecylmercaptan im Molekulargewicht begrenzt ist. In der Regel weisen derartige Emulsionspolymerisator-Teilchen einen Durchmesser von 40 - 1 000 nm auf, sofern es sich um dreiphasige Systeme handelt, wie hier ausgeführt, liegt die Teilchengröße (Durchmesser) gewöhnlich im Bereich 200 - 1 000 nm.

Die heißsiegelfähigen Kunststoff-Folien KF

Die erfindungsgemäßen heißsiegelfähigen Kunststoff-Folien KF können in an sich bekannter Weise hergestellt werden, beispielsweise durch Extrusion des Polymermaterials (vgl. H.F. Mark et al. Encyclopedia of Polymer Science & Technology 2nd Ed. Vol. 11, pg. 269 - 271, J. Wiley 1988; ibidem Vol. 4, 816; Ullmann's Encyclopedia of Industrial Chemistry Vol. A11, pg. 85 - 111, VCH 1988, F. Hensen et al. Handbuch der Kunststoff Extrusionstechnik, Bd. II, Extrusionsanlagen, C. Hanser Verlag 1986).

Die Foliendicke liegt definitionsgemäß im Bereich bis 400 um, vorzugsweise im Bereich 60 bis 300 um, besonders bevorzugt im Bereich 80 - 250 um.

Die erfindungsgemäß erhaltenen Kunststoff-Folien KF sind im Sinne der eingangs dargestellten Aufgabe sehr gut brauchbar. Sie lassen sich insbesondere einigermaßen problemlos heißsiegeln (vgl. G. Stehle, Neue Verpackung loc.cit), wobei die Verarbeitungsbreite und die Verarbeitungssicherheit hervorzuheben ist. Zu betonen ist, daß die Folien KF tiefziehbar, stanzbar und bedruckbar sind. Sie zeichnen sich ferner durch eine geringe Permeation gegenüber Gasen wie $O_2$, $CO_2$ etc. aus. Sie sind mit den üblichen Methoden der Kunststoff-Einfärbung gut einfärbbar (vgl. Becker-Braun, Kunststoff-Handbuch Bd. 1, 539 - 540, Hanser 1990).

Die Folien KF genügen auch insofern den modernen oekologischen Anforderungen als sie recyclierbar sind.

Im Sinne der vorliegenden Aufgabe werden die Kunststoff-Folien KF mit besonderem Vorteil zum Siegeln von Kunststoffbehältern, speziell solchen aus Polystyrol und schlagzäh modifizierendem Styrol eingesetzt. Die aus den erfindungsgemäßen Kunststoff-Folien KF hergestellten, aufgesiegelten Deckel der Kunststoffbehälter entsprechen den eingangs genannten Forderungen nach mechanischer und chemischer

Stabilität, thermischem Verhalten und Verarbeitbarkeit in hervorragendem Maße. Obschon nur aus einem einschichtigen Material aufgebaut, ist die Haftung beispielsweise auf Polystyrol und modifiziertem Polystyrol ausgezeichnet ohne ins Gewicht fallende Störungen durch Anhaften am Siegelbacken.
Erwähnt sei z.B. der Verbund zwischen einer erfindungsgemäßen Folie KF und Behältern, die ganz oder teilweise aus Polystyrol aufgebaut sind, z.B. Joghurtbechern. Weiterhin läßt sich auch problemlos ein Verbund herstellen mit Behältern, welche die gleiche Zusammensetzung aufweisen wie die Kunststoff-Folie KF selbst.

Ganz besonders zum Siegeln von Bechern und Schalen eignen sich erfindungsgemäß Kunststoff-Folien KF, die einen wenigstens zweischichtigen Aufbau aufweisen (vgl. FIG. 1). In FIG. 1 steht das Bezugszeichen T für eine Schicht aus einem Trägermaterial aus zähem, relativ schwer fließendem Material P-CP., das Bezugszeichen S für eine **Siegelschicht** aus einem sehr leicht fließenden Material P-CP bzw. aus dem Copolymeren CP alleine. Die Schicht T besitzt im allgemeinen eine Dicke im Bereich 50 - 398 µm, insbesondere 60 - 250 µm, die Dicke der Siegelschicht S beträgt i.a. 2 - 60 µm, insbesondere 5 - 30 µm.

Derartige Verbundfolien sind durch Coextrusion einer sehr leicht fließenden Einstellung P-CP, beispielsweise mit stark geregelten Molekulargewicht des CP oder mit nur geringem P-Gehalt, auf ein Trägermaterial P-CP mit höherem Molekulargewicht und höherem Anteil an P herstellbar.

Ebenso kann die Siegelschicht S durch Lackierung auf das Trägermaterial T aufgebracht werden. Auf jeden Fall bietet dieser zweischichtige Aufbau der Folie KF den Vorteil, daß die Siegelbedingungen (z.B. die Temperatur der Siegellacke oder der Druck) in weiten Grenzen variiert werden kann, ohne daß ein Anbacken der Folie an den heißen Siegelbacken zu befürchten ist.

Auch diese zweischichtige Folie läßt sich so einstellen, daß Stanzabfälle oder andere Folienreste als Ganzes zum Herstellen einer neuen Trägerfolie T verwendet werden können, wobei lediglich frisches Material für die Siegelschicht S verwendet werden muß, da T und S beliebig mischbar sind.

Vorteilhafte Wirkungen

Die erfindungsgemäßen Kunststoff-Folien KF (bzw. die diesen Folien zugrundeliegenden Formmassen) bieten u.a. folgende Vorteile, wie am Beispiel des Verschließens von Polystyrolbechern aufgezeigt werden soll:

- die Folien sind direkt auf Polystyrol siegelbar
- die Folien können auf den üblichen, für das Heißsiegeln verwendeten Anlagen gesiegelt werden. (z.B. Siegeldruck < 2 bar, Zeitbedarf: 0,1 - 2 sec. Siegeltemperatur ca. 180 - 220 Grad C).
- die Folien zeigen keinerlei Anhaften am heißen Siegelkopf. Dies ist vor allem auf die sehr gute Haftung der Folien auf dem Polystyrol zurückzuführen. Dies ist insbesondere bei zweischichtigen Kunststoff-Folien KF gegeben.
- die Folien sind gut stanzbar
- beim Stanzen anfallende Abfälle können zu neuen Folien verarbeitet werden
- die Folien sind bedruckbar
- die Folien können sehr zäh eingestellt werden, so daß die Verpackungen widerstandsfähig und gut stapelbar sind
- die Folien können je nach Anwendungsfall glasklar (zum guten Erkennen des Füllgutes) oder auch lichtundurchlässig zum Einsatz kommen. Eine Lichtbarriere ist etwa bei fetthaltigen Produkten von Bedeutung
- die gute Barrierewirkung der in dieser Eigenschaft als Polymethacrylate aufzufassenden Folien (Polymethacrylate zeigen im Vergleich zu Polystyrol einen ca. 100-fach geringeren Permeationskoeffizienten für Sauerstoff und $CO_2$) gestattet einerseits geringere Foliendicken und ermöglicht andererseits einen besseren Schutz des verpackten Gutes.
- das Polymethacrylat der Deckelfolie und das Polystyrol des Behälters sind vollkommen verträglich, so daß ein gemeinsames Recycling von Behälter und Deckel möglich ist. Dies gilt sowohl für einschichtige wie auch für mehrschichtige Kunststoff-Folien KF.

BEISPIELE

(Alle Prozentangaben im folgenden beziehen sich auf Gewichtsprozent)

Beispiel 1

a) Dispersionsherstellung

2-stufiges Emulsionspolymerisat mit 50 % Kern, 50 % Schale.

| | |
|---|---|
| 50 % Kern: | Zusammensetzung der Polymeren P: 98 % Butylacrylat, 1 % Allylmethacrylat, 1 % Trimethylolpropantriacrylat. |
| 50 % Schale: | Zusammensetzung der Copolymeren CP: 50 % Butylmethacrylat, 50 % Methylmethacrylat, 2. Hälfte der Schale mit 1 % Mercaptan geregelt. |

Durchführung

In einem Glasreaktor werden unter Argon als Schutzgas 4 g Tetradecansulfonsäure-Natriumsalz und 0,2 mg $Fe(II)SO_4$ in 580 g Wasser gelöst und auf 55 Grad C erwärmt. Darauf wird eine Mischung aus 196 g Butylacrylat, 2 g Allylmethacrylat, 2 g Trimethylolpropantriacrylat zugegeben und emulgiert.
Anschließend wird durch Zugabe von 0,4 g Ammoniumperoxodisulfat und 0,1 g $Na_2S_2O_5$ (jeweils in 10 g Wasser) die Polymerisation gestartet.
Wenn die Innentemperatur ca. 83 Grad C erreicht hat, wird innerhalb von 30 Minuten eine Mischung aus 50 g Methylmethacrylat und 50 g Butylmethacrylat zugetropft. anschließend wird wieder innerhalb von 30 Minuten eine Mischung aus 50 g Methylmethacrylat, 50 g Butylmethacrylat und 1 g 2-Ethylhexylthioglykolat zugetropft. Man läßt noch eine weitere Stunde bei 80 Grad C rühren und kühlt danach ab.
Man erhält eine feinteilige Polymerdispersion, Feststoffgehalt: 40 %, Teilchendurchmesser ca. 130 nm.

b) Herstellen der Folie

Trocknen der Dispersion bei 80 Grad C,
alternativ: Verpressen des durch Gefrierkoagulation gewonnenen Feststoffes bzw. Extrusion des Feststoffes 1a.

c) Versiegeln von Polystyrolbechern

Aus der glasklaren, zweiphasigen, durch Verpressen hergestellten, 0,1 mm dicken Polymethacrylatfolie (gemäß b) wird ein Foliendeckel gestanzt.
Der Foliendeckel wird in einer Heißsiegelpresse auf einen vorgelegten Polystyrolbecher gesiegelt:

| | |
|---|---|
| Temperatur: | 185 Grad C |
| Druck: | 0,8 bar |
| Zeit: | 0,6 sec. |

Es resultiert ein gut verschlossener Polystyrolbecher mit einem glasklaren, gut haftenden Polymethacrylatdeckel.

d) Recycling

Folienmaterial (Deckel) und schlagzähes Polystyrol (Becher) werden in einem Meßkneter (Haake Rheodrive 5000) gemeinsam geknetet. Es resultiert eine gut fließende, homogene Schmelze, aus der neue Becher spritzbar sind.

Beispiel 2

Heißsiegelbare Kunststoff-Folie KF mit einem zweischichtigen Aufbau

| | |
|---|---|
| Trägerschicht T: | Dreiphasiges Emulsionspolymerisat (2a) |
| 20 Gew.-% Kern: | bestehend aus 99,5 % MMA und 0,5 % Allylmethacrylat |

| | |
|---|---|
| 40 Gew.-% 1.Schale: | bestehend aus 99 % Butylacrylat und 1 % Allylmethacrylat |
| 40 Gew.-% 2.Schale: | bestehend aus 50 % Butylmethacrylat und 50 % MMA. Die letzten 75 % der 2. Schale werden durch Zugabe von 0,5 % Dodecylmercaptan (bezogen auf die Monomeren der 2. Schale) geregelt. |
| Teilchendurchmesser: | 446 nm |

Aus der Dispersion wird der Feststoff durch Gefrierkoagulation gewonnen. Das bei der Gefrierkoagulation anfallende Pulver kann gut zu zähen Folien extrudiert bzw. verpresst werden. Ebenso kann es im organischen Lösungsmittel zu organischen Dispersionen "gelöst" werden und anschließend zu dünnen Filmen ausgegossen und getrocknet werden.

Das durch Gefrierkoagulation gewonnene Pulver (2a) wird zu 10 Gew.-% in Toluol zu einer organischen Dispersion gelöst. Diese 10 %ige Lösung wird zu Filmen aufgetrocknet, die anschließend bei 180 Grad C zu 100 um dicken zähen Folien gespreßt werden (= Trägerschicht T).

Ebenso wird das durch Gefrierkoagulation gewonnene zweiphasige Emulsionspolymerisat gemäß Beispiel 1 (1a) in Toluol aufgenommen und zu 20 µm dicken Folien getrocknet (= Siegelschicht S)

Zur Herstellung der heißsiegelbaren zweischichtigen Kunststoff-Folie KF wurde die Trägerschicht T und die Siegelschicht S 10 Minuten bei 120 Grad C verpreßt. Man erhält eine klare, zähe heißsiegelbare Kunststoff-Folie (KF2).

Die so hergestellte zweischichtige Kunststoff-Folie wird mit der Siegelschicht zum Polystyrol unter den nachfolgend genannten Bedingungen auf schlagzähes Polystyrol gesiegelt.

| | |
|---|---|
| Temperatur: | 200 Grad C |
| Druck: | 2,5 bar |
| Zeit: | 2,0 sec. |

Man erhält einen sehr gut haftenden Polystyrol/Kunststoff-Folie KF-Verbund von hoher Festigkeit.

## Patentansprüche

**1.** Heißsiegelfähige Kunststoff-Folien mit wenigstens zweiphasigem Aufbau im Dickenbereich bis 400 um, die zum dichtenden Verschließen von Kunststoff-Behältern geeignet sind,

dadurch gekennzeichnet,

daß die Kunststoff-Folien KF aufgebaut sind aus

a) einem hochmolekularen oder vernetzten Polymeren P mit einem Molekulargewicht Mw größer 50 000 und einer Glastemperatur Tg kleiner 10 Grad C und damit zu wenigstens 2 Gew.-% kovalent verbunden.

b) einem auf Polystyrol haftenden Copolymeren CP mit einer Glastemperatur Tg oberhalb 20 Grad C aufgebaut aus

α) 20 - 80 Gew.-% mindestens eines Monomeren der Formel I

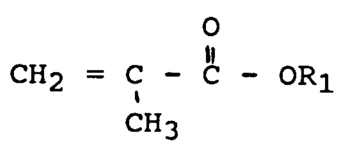

(I)

worin

$R_1$ für Methyl- oder Ethyl steht

β) 80 - 20 Gew.-% mindestens eines Monomeren der Formel II

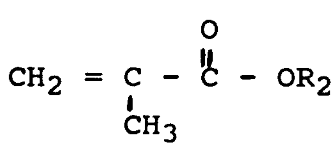

(II)

worin $R_2$ für einen Alkylrest mit 4 bis 18 Kohlenstoffatomen oder einem von Cyclopentyl oder Cyclohexyl verschiedenen Cycloalkylrest steht, und
γ) 0 - 10 Gew.-% eines mit den Monomeren I und II copolymerisierbaren von diesen verschiedenen Monomeren, das nicht Cyclohexylmethacrylat darstellt, mit der Maßgabe, daß sich die Komponenten α), β) und γ) jeweils zu 100 Gew.-% ergänzen.

2. Heißsiegelfähige Kunststoff-Folien KF gemäß Anspruch 1, dadurch gekennzeichnet, daß die Kunststoff-Folien aufgebaut sind aus einem durch eine wenigstens zweistufige Emulsionspolymerisation hergestellten Kern-Schale-Emulsionspolymerisat, das einen Kern aus gegebenenfalls vernetztem Polybutadien, Polyacrylat oder Polyvinylester aufweist und eine Schale aus dem Copolymeren CP aufweist.

3. Heißsiegelfähige Kunststoff-Folie KF gemäß Anspruch 1, dadurch gekennzeichnet, daß die Kunststoff-Folien aufgebaut sind aus einem durch eine wenigstens dreistufige Emulsionspolymerisation hergestelltem wenigstens dreistufigen Emulsionspolymerisat mit
1) einem im allgemeinen vernetzten inneren Kern bestehend aus einem Polyvinylpolymerisat mit einer Tg > 30 Grad C,
2) einer 1. Schale bestehend aus einem in der Regel vernetzten Vinylpolymerisat aus der Gruppe: Polybutadien, Polyvinylester, Polyacrylat mit einer Tg < -10 Grad C und
3) einer äußeren Schale aus dem Copolymeren CP

4. Heißsiegelfähige Kunststoff-Folie KF gemäß den Ansprüchen 2 und 3, dadurch gekennzeichnet, daß das Copolymere CP der äußeren Schale zu wenigstens 20 Gew.-% aus nicht an das Polymere P gebundenen Copolymeren CP mit einem Molekulargewicht im Bereich 2 000 bis 200 000 Dalton besteht.

5. Heißsiegelfähige Kunststoff-Folien mit wenigstens zweiphasigem Aufbau im Dickenbereich bis 400 µm, die zum dichtenden Verschließen von Kunststoff-Behältern geeignet sind, dadurch gekennzeichnet, daß die Kunststoff-Folien KF aufgebaut sind aus wenigstens zwei aufeinander haftenden Schichten, wobei die eine 50 - 398 µm dicke Schicht T aufgebaut ist aus
a') einem hochmolekularen oder vernetzten Polymeren P mit einem Molekulargewicht Mw größer 50 000 und einer Glastemperatur Tg kleiner 10 Grad C und damit zu wenigstens 2 Gew.-% kovalent verbunden
b') einem auf Polystyrol haftenden Copolymeren CP mit einer Glastemperatur Tg oberhalb 20 Grad C aufgebaut aus
α) 20 - 80 Gew.-% mindestens eines Monomeren der Formel I

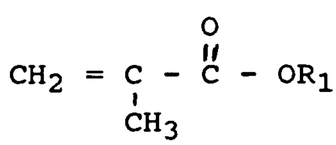
(I)

worin $R_1$ für Methyl oder Ethyl steht
β) 80 - 20 Gew.-% mindestens eines Monomeren der Formel II

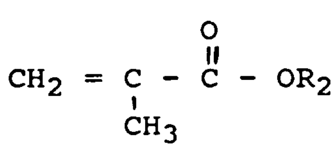
(II)

worin $R_2$ für einen Alkylest mit 4 bis 18, Kohlenstoffatomen oder einem von Cyclopentyl oder Cyclohexyl verschiedenen Cycloalkylrest steht, und
γ) 0 - 10 Gew.-% eines mit den Monomeren I und II copolymerisierbaren von diesen verschiedenen Monomeren, das nicht Cyclohexylmethacrylat darstellt,
und die zweite - aus der ersten Schicht T haftenden 2 - 60 µm dicke Schicht S aufgebaut ist aus wenigstens 10 Gew.-% eines leicht fließenden Materials P-CP.

6. Wenigstens zweischichtige heißsiegelfähige Kunststoff-Folie gemäß Anspruch 5, dadurch gekennzeichnet, daß die zweite - auf der Schicht T haftende - Schicht S, aufgebaut ist aus den Copolymeren CP alleine.

7. Kunststoffverbund aus den heißsiegelfähigen Kunststoff-Folien KF gemäß den Ansprüchen 1 - 6.

8. Kunststoffverbund aus den heißsiegelfähigen Kunststoff-Folien KF gemäß den Ansprüchen 1 - 6 und einem weiteren chemisch von der Kunststoff-Folie unterscheidbarem Kunststoff.

9. Kunststoffverbund aus den heißsiegelfähigen Kunststoff-Folien Kf gemäß den Ansprüchen 1 - 6 und einer Folie aus (schlagzähem) Polystyrol.

10. Behälter mit einem Deckel bestehend aus einer heißsiegelfähigen Kunststoff-Folie KF gemäß den Ansprüchen 1 - 6 und einer Schale oder einem Becher aus (schlagzähem) Polystyrol.

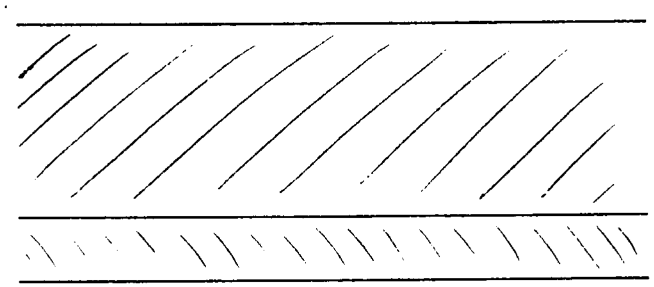


Abb. 1: Aufbau einer zweischichtigen heißsiegelbaren Kunststoff-Folie KF

Europäisches Patentamt

# EUROPÄISCHER RECHERCHENBERICHT

Nummer der Anmeldung
EP 92 12 1288

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| Y | EP-A-0 321 878 (RÖHM GMBH)<br>& US-A-4906699<br>* Seite 4, Zeile 2 - Seite 5, Zeile 19; Ansprüche 1-3 *<br>--- | 1-3 | B32B27/08<br>B32B27/30<br>B65D65/40 |
| Y | DE-A-2 418 949 (TOYODA GOSEI K.K.)<br>* Seite 16, Zeile 19 - Zeile 28; Ansprüche 1,25,8,13,14 *<br>* Seite 7, Absatz 3 - Seite 8, Absatz 3 *<br>--- | 1-3 | |
| Y | EP-A-0 254 417 (MOBIL OIL CORPORATION)<br>* Seite 3, Zeile 26 - Zeile 54; Ansprüche 1,3 *<br>--- | 1 | |
| A | EP-A-0 381 029 (RÖHM GMBH)<br>* Seite 4, Zeile 17 - Seite 6, Zeile 3; Ansprüche 1,3,4 *<br>* Seite 7, Zeile 55 - Seite 8, Zeile 45 *<br>--- | 1-2 | |
| D,Y | US-A-4 513 118 (SUETTERLIN ET AL.)<br>* Spalte 3, Zeile 35 - Spalte 5, Zeile 34; Ansprüche 1,3 *<br>--- | 3 | **RECHERCHIERTE SACHGEBIETE (Int. Cl.5 )** |
| A | GB-A-1 354 907 (BASF AG)<br>* Seite 2, Zeile 9 - Zeile 29; Ansprüche 1,2,7 *<br>* Seite 3, Zeile 27 - Zeile 33 *<br>--- | 5-10 | C08F<br>B32B |
| A | US-A-3 645 838 (NEWMAN, JR. ET AL.)<br>* Spalte 1, Zeile 33 - Zeile 52; Anspruch 1 *<br>* Spalte 2, Zeile 49 - Zeile 51 *<br>----- | 5-10 | |

Der vorliegende Recherchenbericht wurde für alle Patentansprüche erstellt

| Recherchenort | Abschlußdatum der Recherche | Prüfer |
|---|---|---|
| DEN HAAG | 31 MAERZ 1993 | DERZ T. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)